(19) **Europäisches Patentamt** / **European Patent Office** / **Office européen des brevets**

(11) **EP 4 648 354 A1**

(12) **EUROPEAN PATENT APPLICATION**
published in accordance with Art. 153(4) EPC

(43) Date of publication:
**12.11.2025 Bulletin 2025/46**

(21) Application number: **24777664.4**

(22) Date of filing: **06.03.2024**

(51) International Patent Classification (IPC):
***H04L 9/32*** *(2006.01)*

(52) Cooperative Patent Classification (CPC):
**H04L 9/08; H04L 9/32**

(86) International application number:
**PCT/CN2024/080363**

(87) International publication number:
**WO 2024/198874 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 CN 202310308780**

(71) Applicant: **Huawei Cloud Computing Technologies Co., Ltd.**
**Guiyang, Guizhou 550025 (CN)**

(72) Inventors:
• **PAN, Zhizhong**
  **Guiyang, Guizhou 550025 (CN)**
• **TANG, Huajun**
  **Guiyang, Guizhou 550025 (CN)**
• **CHEN, Xinping**
  **Guiyang, Guizhou 550025 (CN)**
• **WEI, Yuke**
  **Guiyang, Guizhou 550025 (CN)**
• **LI, Yong**
  **Guiyang, Guizhou 550025 (CN)**

(74) Representative: **MERH-IP Matias Erny Reichl Hoffmann**
**Patentanwälte PartG mbB**
**Paul-Heyse-Straße 29**
**80336 München (DE)**

(54) **SIGNATURE METHOD AND SYSTEM**

(57)     This application provides a signature method and system, applied to the field of information technologies. A client receives a to-be-signed first message from a cloud service node. The client sends a first parameter set to a server. The server sends a second parameter set to the client. The first parameter set is generated based on the first message, a 1st triplet, a first random number, identification information of the client, and a first private key segment. The second parameter set is generated based on the first parameter set, a 2nd triplet, a second random number, and a second private key segment. The second parameter set includes a first signature component. The client generates a second signature component based on the 1st triplet and the second parameter set, and sends a digital signature of the first message to the cloud service node, where the digital signature includes the first signature component and the second signature component, and is used for identity verification on the cloud service node in a cloud server. In this application, efficiency and performance of signing a message can be improved.

FIG. 5

**Description**

CROSS-REFERENCE TO RELATED APPLICATIONS

This application claims priority to Chinese Patent Application No. 202310308780.5, filed with the China National Intellectual Property Administration on March 27, 2023 and entitled "SIGNATURE METHOD AND SYSTEM, which is incorporated herein by reference in its entirety.

TECHNICAL FIELD

This application relates to the field of information technologies, and in particular, to a signature method and system.

BACKGROUND

In an SM2 digital signature algorithm, one signer generates a digital signature of a message, and one verifier verifies reliability of the signature. Each signer has a pair of public and private keys that are paired with each other. The private key is used by the signer to generate the digital signature, and needs to be securely stored. The public key is used to verify the signature, and may be published.

To ensure storage security of the private key, the private key is usually split into two segments to be stored on a client and a server separately. The two parties cannot obtain the private key segments from each other, and the digital signature of the message is generated through collaboration. In a current two-party collaborative signature method, a client and a server need to perform a plurality of rounds of information interaction to calculate a digital signature used by the client, resulting in low efficiency and performance.

SUMMARY

This application provides a signature method and system, to improve efficiency and performance of collaborative signature between a client and a server.

According to a first aspect, an embodiment of this application provides a signature method, including: A client receives a to-be-signed first message from a cloud service node. The client sends a first parameter set to a server, where the first parameter set is generated based on the first message, a 1st triplet, a first random number, identification information of the client, and a first private key segment. The server sends a second parameter set to the client, where the second parameter set is generated based on the first parameter set, a 2nd triplet, a second random number, and a second private key segment, and the second parameter set includes a first signature component. The client generates a second signature component based on the 1st triplet and the second parameter set. The client sends a digital signature of the first message to the cloud service node, where the digital signature of the first message includes the first signature component and the second signature component, and the digital signature of the first message is used for identity verification on the cloud service node in a cloud server.

In the foregoing design, the client and the server need to exchange information only once during collaborative signature, to quickly complete the digital signature of the message. This can reduce a communication delay in a two-party collaborative signature process, thereby improving signature efficiency and performance and collaborative decryption performance.

In a possible design, a 1st element and a 2nd element in the 1st triplet are randomly generated by the client, a 1st element and a 2nd element in the 2nd triplet are randomly generated by the server, and a 3rd element in the 1st triplet and a 3rd element in the 2nd triplet are generated based on input and output of a first multiplier, where the input of the first multiplier includes the 1st element and the 2nd element in the 1st triplet, and the 1st element and the 2nd element in the 2nd triplet. In such a design, the triplet for a signature may be pre-generated before the two-party collaborative signature. This can reduce a calculation amount in the two-party collaborative signature process, and improve performance of the collaborative signature.

In a possible design, the first private key segment is generated based on a third random number and output of a second multiplier, and the second private key segment is generated based on a fourth random number and the output of the second multiplier, where the output of the second multiplier corresponds to input of the second multiplier, and the input of the second multiplier is determined based on a third private key segment and the third random number that are randomly generated by the client, and a fourth private key segment and the fourth random number that are randomly generated by the server. In such a design, the private key segment for a signature may be pre-generated before the two-party collaborative signature. This can reduce a calculation amount in the two-party collaborative signature process, and improve performance of the collaborative signature.

In a possible design, the first parameter set includes the following parameters: a first random point that is on an elliptic curve and that is generated based on the first random number; a hash value generated based on the first message and the identification information of the client; a first difference between the first private key segment and the 1st element in the 1st triplet; and a second difference between the first random number and the 2nd element in the 1st triplet. The first parameter set may be used to determine the first signature component, and the first signature component is a first component of the digital signature of the first message.

In a possible design, the second parameter set includes the following parameters: the first signature component generated based on the first random point, the second random number, and the hash value; a first intermediate value generated based on the first difference, the second private key segment, and the 1st element in the 2nd triplet; a second intermediate value generated based on the second difference, the 2nd element in the 2nd triplet, the second random number, and the first signature component; and a third intermediate value generated based on the first intermediate value, the second intermediate value, and the 2nd triplet.

In a possible design, the first parameter set may further include the identification information of the client. Correspondingly, the server may determine, based on the identification information of the client, the second private key segment paired with the first private key segment. Such a design may be applied to a scenario in which the server is connected to a plurality of clients, to distinguish a client that currently performs collaborative signature with the server.

In a possible design, the client and the server may further collaboratively update private key segments. For example, the client updates the first private key segment based on a key derivation function and a common random point; and the server updates the second private key segment based on the key derivation function and the common random point. The common random point is a point that is on the elliptic curve and that is generated based on a fifth random number and a sixth random number, the fifth random number is randomly generated by the client, and the sixth random number is randomly generated by the server. In such a design, dynamic storage of the private key segments of two parties can be implemented. This can increase difficulty in cracking the private key segments of the two parties, and can protect the private key segments, that is, reduce a possibility of leaking the private key segments, thereby improving security of a key and the digital signature.

According to a second aspect, an embodiment of this application provides a signature system, including a client and a server. The client is configured to receive a to-be-signed first message from a cloud service node, and send a first parameter set to the server, where the first parameter set is generated based on the first message, a 1st triplet, a first random number, identification information of the client, and a first private key segment. The server is configured to send a second parameter set to the client, where the second parameter set is generated based on the first parameter set, a 2nd triplet, a second random number, and a second private key segment, and the second parameter set includes a first signature component. The client is further configured to generate a second signature component based on the 1st triplet and the second parameter set, and send a digital signature of the first message to the cloud service node, where the digital signature of the first message includes the first signature component and the second signature component, and the digital signature of the first message is used for identity verification on the cloud service node in a cloud server.

In a possible design, a 1st element and a 2nd element in the 1st triplet are randomly generated by the client, a 1st element and a 2nd element in the 2nd triplet are randomly generated by the server, and a 3rd element in the 1st triplet and a 3rd element in the 2nd triplet are generated based on input and output of a first multiplier, where the input of the first multiplier includes the 1st element and the 2nd element in the 1st triplet, and the 1st element and the 2nd element in the 2nd triplet.

In a possible design, the first private key segment is generated based on a third random number and output of a second multiplier, and the second private key segment is generated based on a fourth random number and the output of the second multiplier, where the output of the second multiplier corresponds to input of the second multiplier, and the input of the second multiplier is determined based on a third private key segment and the third random number that are randomly generated by the client, and a fourth private key segment and the fourth random number that are randomly generated by the server.

In a possible design, the first parameter set includes the following parameters: a first random point that is on an elliptic curve and that is generated based on the first random number; a hash value generated based on the first message and the identification information of the client; a first difference between the first private key segment and the 1st element in the 1st triplet; and a second difference between the first random number and the 2nd element in the 1st triplet.

In a possible design, the second parameter set includes the following parameters: the first signature component generated based on the first random point, the second random number, and the hash value; a first intermediate value generated based on the first difference, the second private key segment, and the 1st element in the 2nd triplet; a second intermediate value generated based on the second difference, the 2nd element in the 2nd triplet, the second random number, and the first signature component; and a third intermediate value generated based on the first intermediate value, the second intermediate value, and the 2nd triplet.

In a possible design, the first parameter set further includes the identification information of the client, and the server is further configured to determine, based on the identification information of the client, the second private key segment paired with the first private key segment.

In a possible design, the client is further configured to update the first private key segment based on a key derivation function and a common random point; and the server is further configured to update the second private key segment based on the key derivation function and the common random point. The common random point is a point that is on the elliptic curve and that is generated based on a fifth random number and a sixth random number, the fifth random number is randomly generated by the client, and the sixth random number is randomly generated by the server.

According to a third aspect, an embodiment of this application provides a computing device cluster, including at least one computing device. The computing device includes a processor and a memory. The memory of the at least one computing device is configured to store computer-executable instructions. The processor of the at least one computing device is configured to execute the computer-executable instructions, to enable the computing device cluster to perform the method in any one of the first aspect and the possible designs of the first aspect.

According to a fourth aspect, an embodiment of this application provides a computer-readable storage medium. The computer-readable storage medium includes computer program instructions, and when the computer program instructions are run by a computing device cluster, the computing device cluster is enabled to perform the method in any one of the first aspect and the possible designs of the first aspect.

According to a fifth aspect, an embodiment of this application provides a computer program product. The computer program product includes instructions, and when the instructions are run by a computing device cluster, the computing device cluster is enabled to perform the method in any one of the first aspect and the possible designs of the first aspect.

## BRIEF DESCRIPTION OF DRAWINGS

FIG. 1 is a diagram of an architecture of a signature system according to an embodiment of this application;

FIG. 2 is a diagram of an architecture of another signature system according to an embodiment of this application;

FIG. 3 is a schematic flowchart of pre-calculating a triplet according to an embodiment of this application;

FIG. 4 is a schematic flowchart of a key generation method according to an embodiment of this application;

FIG. 5 is a schematic flowchart of a signature method according to an embodiment of this application;

FIG. 6 is a schematic flowchart of a key update method according to an embodiment of this application;

FIG. 7 is a diagram of a structure of a computing device cluster according to an embodiment of this application; and

FIG. 8 is a diagram of a structure of another computing device cluster according to an embodiment of this application.

## DESCRIPTION OF EMBODIMENTS

To make objectives, technical solutions, and advantages of embodiments of this application clearer, the following further describes embodiments of this application in detail with reference to accompanying drawings.

At least one (item or round) in embodiments of this application indicates one (item or round) or more (items or rounds). A plurality of (items or rounds) means two (items or rounds) or more than two (items or rounds). The term "and/or" describes an association relationship for describing associated objects and indicates that three relationships may exist. For example, A and/or B may indicate the following three cases: Only A exists, both A and B exist, and only B exists. The character "/" usually indicates an "or" relationship between the associated objects. In addition, it should be understood that although terms such as "first" and "second" may be used in embodiments of this application to describe objects, these objects should not be limited by these terms. These terms are merely used to distinguish the objects from each other.

The terms "including", "having", and any variants thereof in the following descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any method or design solution described as an "example" or "for example" in embodiments of this application should not be explained as being more preferred or advantageous than another method or design solution. Exactly, use of the word such as "example" or "for example" is intended to present a related concept in a specific manner.

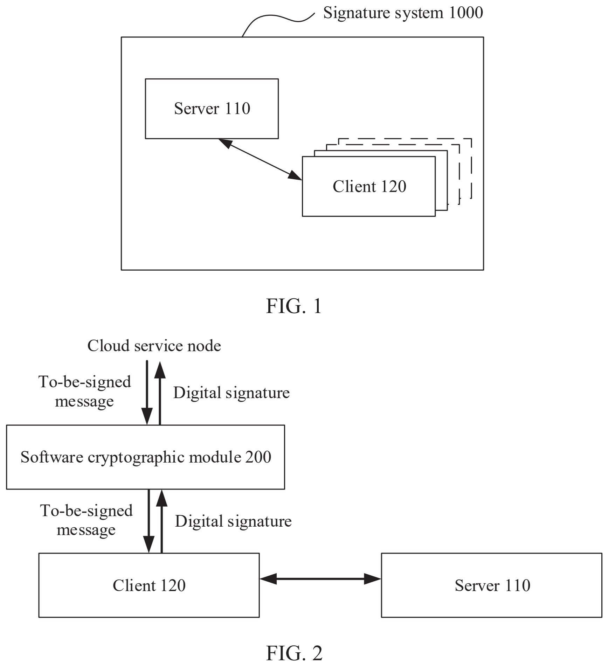

A signature method provided in embodiments of this application may be applied to a system shown in FIG. 1, and the system is referred to as a signature system 1000 below. The signature system 1000 includes a server 110 and at least one client 120. Any one of the at least one client 120 may collaborate with the server to generate a digital signature of a message corresponding to the client.

Both the client and the server may be implemented by software, or may be implemented by hardware. For example, the following describes an implementation of the client by using the client as an example. Similarly, for an implementation of the server, refer to the implementation of the client.

When implemented by software, the client may be a process, an application, or a code block running on a computing device. The computing device may be at least one of a physical host (or referred to as a physical machine), a virtual machine, or a container. Further, there may be one or more computing devices. For example, the client may be an application running on a plurality of hosts/virtual machines/containers. It should be noted that the plurality of hosts/virtual machines configured to run the application may be distributed in a same availability zone (availability zone, AZ), or may be distributed in different AZs. The plurality of hosts/virtual machines/containers configured to run the application may be distributed in a same region (region), or may be distributed in different regions. Typically, one region may include a plurality of AZs. Similarly, the plurality of hosts/virtual machines configured to run the application may be distributed in a same virtual private cloud (virtual private cloud, VPC), or may be distributed in a plurality of VPCs. Typically, one region may include a plurality of VPCs, and one VPC may include a plurality of AZs.

In a possible design, the client and the server may run in different virtual machines in a same physical host, to implement isolation at a virtual machine level. In another possible design, the client and the server may run in different physical hosts separately, to implement isolation at a physical host level.

When the client is implemented by hardware, in a possible implementation, the client may include at least one computing device, and the like; and a plurality of computing devices included in the client may be distributed in a same AZ, or may be distributed in different AZs; or a plurality of computing devices included in the client may be distributed in a same region, or may be distributed in different regions; or a plurality of computing devices included in the client may be distributed in a same VPC, or may be distributed in a plurality of VPCs. In another possible implementation, the client may alternatively be a device or the like implemented by an application-specific integrated circuit (application-specific integrated circuit, ASIC) and/or a programmable logic device (programmable logic device, PLD). The PLD may be a complex programmable logic device (complex programmable logic device, CPLD), a field-programmable gate array (field-programmable gate array, FPGA), generic array logic (generic array logical, GAL), or any combination thereof.

Embodiments of this application may be applied to a cloud service scenario, for example, an elastic load balance (elastic load balance, ELB), an APIGW, public Nginx, an objectbased storage (object based storage, OBS) service, a web application firewall (web application firewall, WAF), and an internet of things (internet of things, IOT). In the foregoing cloud service scenario, a cloud service platform that can interact with a cloud user, and a cloud server that provides a cloud service are deployed. The cloud user may rent or purchase a cloud service, and initiate a corresponding service on the cloud service platform based on the rented or purchased cloud service. A service initiated by the cloud user is referred to as a cloud service node below. Identity verification needs to be first completed between the cloud service node and the cloud server, to establish a secure communication link. According to the signature method provided in embodiments of this application, in an optional implementation, the client and the server may be deployed on the cloud. The cloud service node invokes a collaborative signature function of the client and the server to obtain a corresponding signature result, and sends the signature result to the cloud server, so that the cloud service performs identity verification on the cloud service node based on the signature result, and the secure communication link is established between the cloud server and the cloud service node after the verification succeeds.

In addition, optionally, as shown in FIG. 2, a software cryptographic module 200 may be further disposed in the cloud service platform. The software cryptographic module 200 manages the client and the server in a unified manner, and provides an invocation interface for the client and the server. For example, the cloud service node (that is, the service initiated by the cloud user) may input a to-be-signed message to the software cryptographic module 200. The software cryptographic module invokes the client 120 and the server 110 to collaboratively generate a digital signature of the message, and feeds back the digital signature to the cloud service node, where the digital signature is used for identity verification on the cloud service node in the cloud server. In addition, embodiments of this application may also be applied to another scenario requiring a digital signature. This is not limited in embodiments of this application.

The following describes in detail the signature method provided in embodiments of this application. For ease of implementation, technical terms in embodiments of this application are first described.

(1) Elliptic curve

The elliptic curve in embodiments of this application is an elliptic curve specified in a public key cryptography algorithm based on an SM2 elliptic curve. Related parameters used to describe the elliptic curve include (p, a, b, n, G), where p is an order of a finite field $\mathbb{F}_p$; a and b are parameters of an elliptic curve E: $y^2 = x^3 + a*x + b$; and n is a quantity of points of the elliptic curve E in the finite field $\mathbb{F}_p$. For example, a length of n is 256 bits (bits).

In addition, it may be understood that a scalar multiple of a base point on an elliptic curve may be obtained based on a positive integer and the base point G on the elliptic curve, and a relationship between the scalar multiple and the base point may be represented as D=[d]*G.

(2) Multiplier

The multiplier in embodiments of this application is a multiplier based on two-party multiplication. The multiplier based on two-party multiplication is run by two parties A and B. A and B input different parameters to the multiplier separately, and the multiplier feeds back different outputs to A and B separately. The input and the output of the multiplier meet a specific relationship. In addition, in this process, neither A nor B can obtain input and output of each other.

For example, A and B input integers $a_1$ and $a_2$ to the multiplier separately, and the multiplier returns and outputs $m_1$ and $m_2$ to A and B separately. The input and the output of the multiplier satisfy $m_1 + m_2 = a_1 * a_2$. For another example, A and B input integers $(x_1, y_1)$ and $(x_2, y_2)$ as a pair to the multiplier separately, and the multiplier returns and outputs $z_1$ and $z_2$ to A and B separately. The input and the output of the multiplier satisfy $z_1 + z_2 = (x_1 + x_2) * (y_1 + y_2)$.

(3) Triplet

The triplet is an element combination including three elements, or is referred to as a 3-tuple. The triplet in embodiments of this application includes a 1st triplet generated by a client and a 2nd triplet generated by a server, and the 1st triplet and the 2nd triplet are used to generate a digital signature.

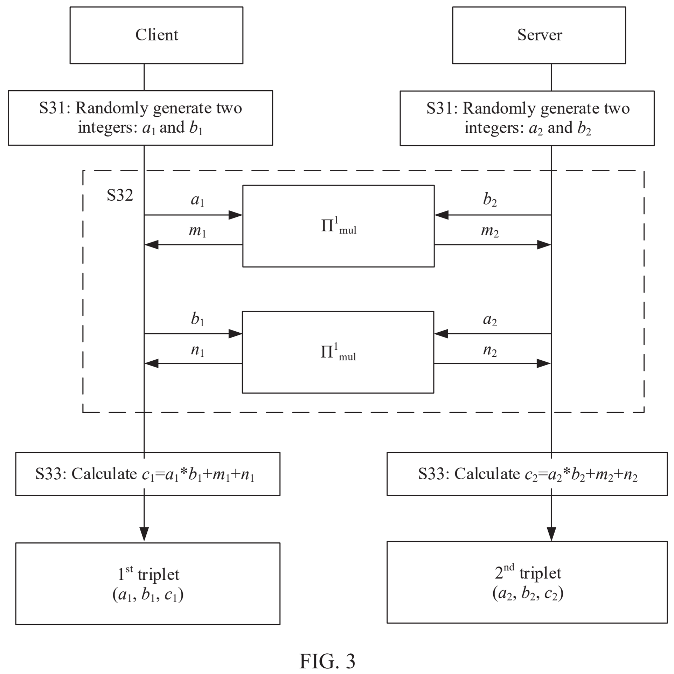

As shown in FIG. 3, the client and the server may generate the 1st triplet and the 2nd triplet via a two-party-based multiplier. The following steps are included.

Step 31: The client randomly generates two integers: $a_1$ and $b_1$, where $a_1 \in \mathbb{Z}_n$, $b_1 \in \mathbb{Z}_n$, and $\mathbb{Z}_n$ represents an integer set. For example, the integer set includes integers from 0 to n - 1. In addition, $1 \leq a_1 \leq n - 1$, and $1 \leq b_1 \leq n - 1$. Similarly, the server randomly generates two integers: $a_2$ and $b_2$, where $a_2 \in \mathbb{Z}_n$, and $b_2 \in \mathbb{Z}_n$. In addition, $1 \leq a_2 \leq n - 1$, and $1 \leq b_2 \leq n - 1$. Optionally, the client may generate $a_1$ and $b_1$ via a random number generator, and the server may generate $a_2$ and $b_2$ via a random number generator.

Step 32: The client inputs $a_1$ and the server inputs $b_2$ to a multiplier $\Pi^1_{mul}$. Output of the multiplier includes $m_1$ and $m_2$ that correspond to $a_1$ and $b_2$, where $m_1 + m_2 = a_1 * b_2$. Specifically, the multiplier $\Pi^1_{mul}$ outputs $m_1$ to the client, and the multiplier $\Pi^1_{mul}$ outputs $m_2$ to the server. Similarly, the client inputs $b_1$ and the server inputs $a_2$ to the multiplier $\Pi^1_{mul}$. Output of the multiplier $\Pi^1_{mul}$ includes $n_1$ and $n_2$ that correspond to $b_1$ and $a_2$, where $n_1 + n_2 = b_1 * a_2$. Specifically, the multiplier $\Pi^1_{mul}$ outputs $n_1$ to the client, and the multiplier $\Pi^1_{mul}$ outputs $n_2$ to the server.

Step 33: The client may calculate $c_1 = a_1 * b_1 + m_1 + n_1$ based on the input $(a_1, b_1)$ and the output $(m_1, n_1)$

that are of the multiplier $\Pi^1_{mul}$ and that correspond to the client. Similarly, the server may calculate $c_2 = a_2 * b_2 + m_2 + n_2$ based on the input $(a_2, b_2)$ and the output $(m_2, n_2)$ that are of the multiplier $\Pi^1_{mul}$ and that correspond to the server. Optionally, the multiplier $\Pi^1_{mul}$ may be based on oblivious transfer-based two-party multiplication.

Based on the foregoing steps 1 to 3, the client may obtain the 1st triplet $(a_1, b_1, c_1)$, and the server may obtain the 2nd triplet $(a_2, b_2, c_2)$. The 1st triplet and the 2nd triplet meet the following relationship: $c_1 + c_2 = (a_1 + a_2) * (b_1 + b_2)$.

In a possible design, the client and the server pre-generate, before a collaborative signature, the 1st triplet and the 2nd triplet that are required for the collaborative signature. A process of generating the 1st triplet and the 2nd triplet (that is, the foregoing steps 31 to 33) may also be summarized as a pre-calculation phase. A result of the pre-calculation phase is as follows: The client obtains the 1st triplet, and the server obtains the 2nd triplet.

(4) Private key segment and public key

A private key segment of a client and a private key segment of a server are used in embodiments of this application. Specifically, the private key segment may be classified into a private key segment used for a digital signature and a private key segment used for generating a public key.

For ease of differentiation, a private key segment used by the client for a digital signature is denoted as a first private key segment, and the first private key segment may be stored in a storage medium of a computing device in which the client is located; and a private key segment used by the server for a digital signature is denoted as a second private key segment, and the second private key segment may be stored in a storage medium of a computing device in which the server is located. A private key segment used by the client to generate a public key is denoted as a third private key segment, and a private key segment used by the server to generate a public key is denoted as a fourth private key segment.

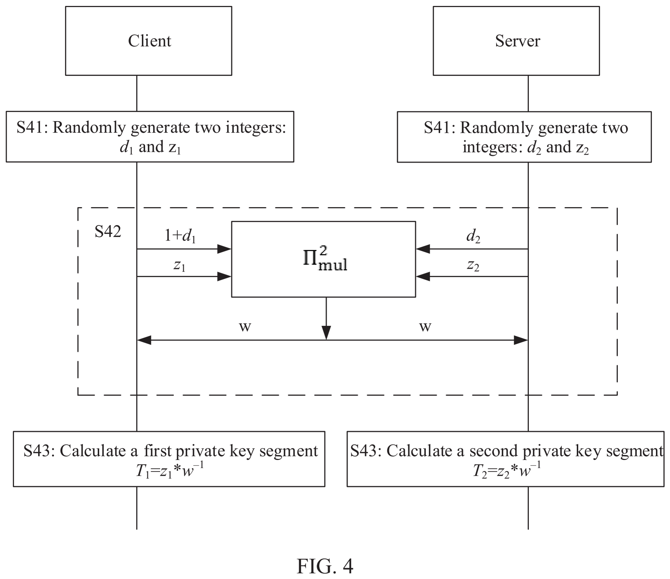

FIG. 4 shows a key generation method. The client and the server collaboratively generate a public key, a first private key segment, and a second private key segment. The method mainly includes the following steps.

S41: The client randomly generates two integers: $d_1$ and $z_1$, where $d_1 \in \mathbb{Z}_n$, and $z_1 \in \mathbb{Z}_n$. In addition, $1 \leq d_1 \leq n - 1$, and $1 \leq z_1 \leq n - 1$. The client uses $d_1$ as a third private key segment, and obtains a first public key segment $P_1 = [d_1] * G$ of the client through calculation. The client sends the first public key segment $P_1$ and identification information of the client (for example, denoted as $ID_A$) to the server. Correspondingly, the server may also randomly generate two integers: $d_2$ and $z_2$, where $d_2 \in \mathbb{Z}_n$ and $z_2 \in \mathbb{Z}_n$. In addition, $1 \le d_2 \le n - 1$, and $1 \le z_2 \le n - 1$. The server uses $d_2$ as a fourth private key segment, and calculates the public key $P = P_1 + [d_2] * G$ between the client and the server based on the fourth private key segment $d_2$ and the received first public key segment $P_1$. $[d_2] * G$ may also be understood as a second public key segment $P_2$ of the server. Further, the server sends the calculated public key $P$ to the client.

It may be understood that the third private key segment of the client is not published to the server, and the fourth private key segment of the server is not published to the client. Optionally, the third private key segment and the fourth private key segment may be positive integers. For example, the third private key segment and the fourth private key segment may be positive integers with large values, to reduce a probability that the value of the third private key segment or the value of the fourth private key segment is obtained through tests.

S42: The client and the server collaboratively generate the first private key segment of the client and the second private key segment of the server via a two-party-based multiplier. Optionally, the multiplier may be a multiplier based on Beaver two-party multiplication, for example, a multiplier constructed based on the 1st triplet and the 2nd triplet.

Specifically, the client inputs $1 + d_1$ and $z_1$ to a multiplier $\Pi_{mul}^2$, and the client inputs $d_2$ and $z_2$ into the multiplier $\Pi_{mul}^2$. Output of the multiplier $\Pi_{mul}^2$ includes w corresponding to $1 + d_1$, $z_1$, $d_2$, and $z_2$, where $w = (1 + d_1 + d_2) * (z_1 + z_2)$. The multiplier $\Pi_{mul}^2$ outputs w to the client and the server.

S43: The client may calculate the first private key segment $T_1 = z_1 * w^{-1}$ based on $z_1$ and w. The server may calculate the first private key segment $T_2 = z_2 * w^{-1}$ based on $z_2$ and w.

In addition, it may be understood that, in embodiments of this application, four arithmetic operations related to integers all are modulo-n operations. In other words, results of the four arithmetic operations related to integers are integers less than or equal to n. For example, the foregoing modulo $w^{-1}$ represents an multiplicative inverse of w modulo n, where $w^{-1} * w \equiv 1 \bmod n$. For another example, $z_1 * w^{-1}$ may be replaced with and described as $(z_1 * w^{-1}) \bmod n$, that is, $T_1 < n$; or $z_2 * w^{-1}$ may be replaced with and described as $(z_2 * w^{-1}) \bmod n$, that is, $T_2 < n$.

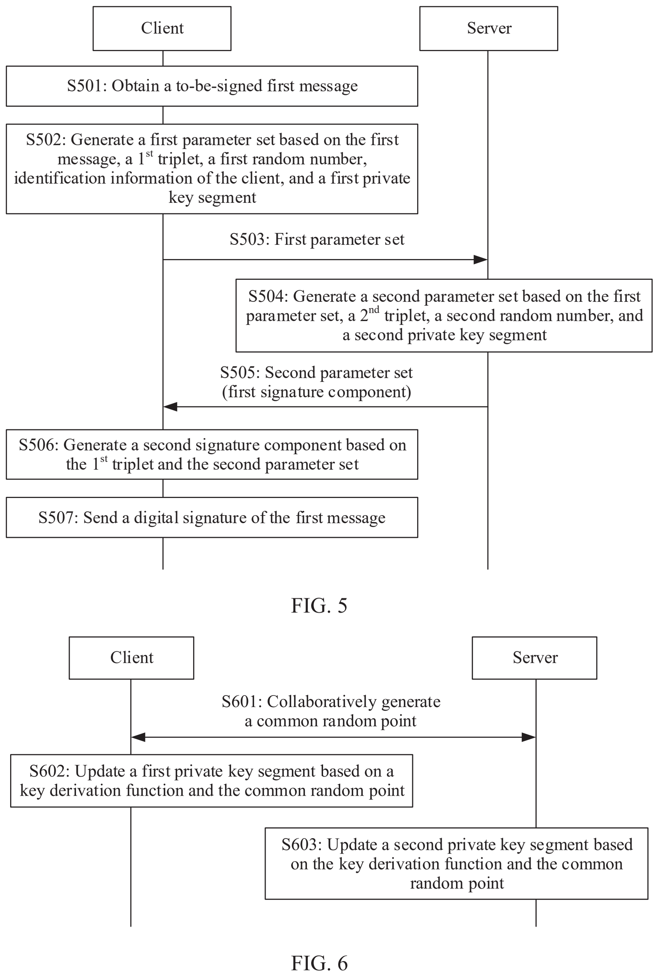

The following describes in detail the signature method provided in embodiments of this application by using an example in which a client and a server perform a collaborative signature. FIG. 5 shows a signature method. The method mainly includes the following steps.

S501: The client obtains a to-be-signed first message.

In the foregoing cloud service scenario, the first message obtained by the client is from a cloud service node. For example, when a software cryptographic module is disposed on a cloud service platform to manage the client and the server in a unified manner, the cloud service node may input the first message to the software cryptographic module, and then the software cryptographic module may input the first message to the client.

Optionally, the first message may be a handshake message sent by the cloud service node to a cloud server.

S502: The client generates a first parameter set based on the first message, a 1st triplet, a first random number, identification information of the client, and a first private key segment.

A 1st element and a 2nd element in the 1st triplet are randomly generated by the client, and a 3rd element in the 1st triplet is generated based on input and output of a first multiplier, where the input of the first multiplier includes the 1st element and the 2nd element in the 1st triplet, and a 1st element and a 2nd element in a 2nd triplet. There is a mapping relationship or a correspondence between the output of the first multiplier and the foregoing input. For example, the first multiplier may be the multiplier $\Pi_{mul}^1$ described above. For a manner of generating the 1st triplet of the client, refer to the steps described in FIG. 3 for understanding. To be specific, the client may pre-generate the 1st triplet according to the steps described in FIG. 3. Details are not described in embodiments of this application. In such a design, the 1st triplet used for a digital signature is generated in advance. This can reduce a parameter calculation amount of the client in a collaborative signature phase, and improve signature efficiency and performance.

Similarly, the first private key segment is generated based on a third random number and output of a second multiplier, where the output of the second multiplier corresponds to input of the second multiplier, and the input of the second multiplier is determined based on a third private key segment and the third random number that are randomly generated by the client, and a fourth private key segment and a fourth random number that are randomly generated by the server. For example, the second multiplier may be the multiplier $\Pi_{mul}^2$ described above. For a manner of generating the first private key segment of the client, refer to the steps described in FIG. 4 for understanding. The third private key segment is $d_1$ randomly generated by the client, the third random number is $z_1$ randomly generated by the client, the fourth private key segment is $d_2$ randomly generated by the server, and the fourth random number is $z_2$ randomly generated by the server. The client may pre-generate the first private key segment according to the steps described in FIG. 4. Details are not described in embodiments of this application. In such a design, the first private key segment used for a digital signature is generated in advance, and the first private key segment does not need to be calculated in the collaborative signature phase. This can reduce a parameter calculation amount of the client in the collaborative signature phase, and improve signature efficiency and performance.

In a possible design, the first parameter set includes the following parameters:

(1-1) First random point that is on an elliptic curve and that is generated based on the first random number

**[0064]** For example, the client may calculate the first random point $R_1 = [k_1] * G$, where $k_1$ represents the first random number generated by the client, $k_1 \in \mathbb{Z}_n$, and $1 \leq k_1 \leq n - 1$.

(1-2) Hash value generated based on the first message and the identification information of the client

The hash value may be understood as a hash value of the first message. For example, the client may generate the hash value of the first message based on an SM3 hash function. Before the hash value of the to-be-signed first message is calculated, a hash value of the identification information of the client needs to be concatenated to the first message. For example, the client may calculate the hash value of the first message: $e = \text{Hash}(Z_A||M)$, where e represents the hash value of the first message, $Z_A$ represents the hash value of the identification information of the client, || represents the splicer, M represents the first message, Hash represents a hash function, and a value of e is a hash value of $Z_A||M$ or is referred to as a digital digest.

(1-3) First difference between the first private key segment and the 1st element in the 1st triplet

For example, the client may calculate the first difference $f_1 = T_1 - a_1$, where $T_1$ represents the first private key segment generated by the client, and $a_1$ represents the 1st element in the 1st triplet.

(1-4) Second difference between the first random number and the 2nd element in the 1st triplet

For example, the client may calculate the first difference $g_1 = k_1 - b_1$, where $k_1$ represents the first random number generated by the client, and $b_1$ represents the 2nd element in the 1st triplet.

S503: The client sends the first parameter set to the server.

In correspondence to S502, it may be understood that the first parameter set sent by the client to the server includes $(R_1, e, f_1, g_1)$.

Optionally, the client may further send the identification information of the client to the server. For example, the client includes the identification information of the client in the first parameter set.

S504: The server generates a second parameter set based on the first parameter set, the 2nd triplet, the second random number, and the second private key segment.

The 1st element and the 2nd element in the 2nd triplet are randomly generated by the server, and a 3rd element in the 2nd triplet is generated based on the input and the output of the first multiplier, where the input of the first multiplier includes the 1st element and the 2nd element in the 1st triplet, and the 1st element and the 2nd element in the 2nd triplet. There is the mapping relationship or the correspondence between the output of the first multiplier and the foregoing input. For example, the first multiplier may be the multiplier $\Pi_{mul}^1$ described above. For a manner of generating the 2nd triplet of the server, refer to the steps described in FIG. 3 for understanding. To be specific, the server may pre-generate the 2nd triplet according to the steps described in FIG. 3. Details are not described in embodiments of this application. In such a design, the 2nd triplet used for a digital signature is generated in advance. This can reduce a parameter calculation amount of the server in the collaborative signature phase, and improve signature efficiency and performance.

In a possible design, the server includes private key segments paired with private key segments of one or more clients, and the identification information of the client may be used by the server to determine a private key segment paired with the private key segment of the client. Based on this, in correspondence to the description in S503, the server may determine, based on the received identification information of the client, the second private key segment paired with the first private key segment.

The following uses the second private key segment as an example to describe a manner of generating the private key segment included in the server. The second private key segment is generated based on the fourth random number and the output of the second multiplier, where the output of the second multiplier corresponds to the input of the second multiplier, and the input of the second multiplier is determined based on the third private key segment and the third random number that are randomly generated by the server, and the fourth private key segment and the fourth random number that are randomly generated by the server. For example, the second multiplier may be the multiplier $\Pi_{mul}^2$ described above. For a manner of generating the second private key segment of the server, refer to the steps described in FIG. 4 for understanding. The third private key segment is $d_1$ randomly generated by the server, the third random number is $z_1$ randomly generated by the server, the fourth private key segment is $d_2$ randomly generated by the server, and the fourth random number is $z_2$ randomly generated by the server. The server may pre-generate the second private key segment according to the steps described in FIG. 4. Details are not described in embodiments of this application. In such a design, the second private key segment used for a digital signature is generated in advance, and the second private key segment does not need to be calculated in the collaborative signature phase. This can reduce a parameter calculation amount of the server in the collaborative signature phase, and improve signature efficiency and performance.

In a possible design, the second parameter set includes the following parameters:

(2-1) First signature component generated based on the first random point, the second random number, and the hash value

For example, the server may first generate a second random point $R = R_1 + [k_2] * G$ on the elliptic curve based on the first random point and the second random number, where $k_2$ represents the second random number generated by the client, $k_2 \in \mathbb{Z}_n$, and $1 \leq k_2 \leq n - 1$. Coordinate information of the second random point R may be represented as $(x, y)$. Then, the server generates the first signature component $r = (x + e) \bmod n$ based on a horizontal coordinate of the second random point and the hash value. In addition, the first signature component may also be replaced with and described as a first component of a digital signature of the first message.

(2-2) First intermediate value generated based on the first difference, the second private key segment, and the 1st element in the 2nd triplet

For example, the server calculates the first intermediate value $f = f_1 + T_2 - a_2$, where $f_1$ represents the first difference, $T_2$ represents the second private key segment, and $a_2$ represents the 1st element in the 2nd triplet.

(2-3) Second intermediate value generated based on the second difference, the 2nd element in the 2nd triplet, the second random number, and the first signature component

For example, the server calculates the second intermediate value $g = g_1 + k_2 - b_2 + r$, where $g_1$ represents the second difference, $k_2$ represents the second random number, $b_2$ represents the 2nd element in the 2nd triplet, and r represents the first signature component.

(2-4) Third intermediate value generated based on the first intermediate value, the second intermediate value, and the 2nd triplet

For example, the server calculates the third intermediate value $s_2 = c_2 + a_2 * g + b_2 * f$, where $(a_2, b_2, c_2)$ represents the 2nd triplet, f represents the first intermediate value, and g represents the second intermediate value.

S505: The server sends the second parameter set to the client.

In correspondence to S504, it may be understood that the second parameter set sent by the server to the client includes $(f, g, r, s_2)$. The second parameter set includes the first signature component.

S506: The client generates a second signature component based on the 1st triplet and the second parameter set.

For example, the client calculates the second signature component $s = f * g + s_2 + c_1 + a_1 * g + b_1 * f - r$, where $(a_1, b_1, c_1)$ represents the 1st triplet, and $(f, g, r, s_2)$ represents the second signature component. In addition, the second signature component may also be replaced with and described as a second component of the digital signature of the first message.

S507: The client sends the digital signature of the first message, where the digital signature of the first message includes the first signature component and the second signature component.

For example, in correspondence to the description in S506, the digital signature of the first message may be represented as $(r, s)$. In the foregoing cloud service scenario, the client may send the digital signature of the first message to the cloud service node, for identity verification on the cloud service node in the cloud server. For example, the cloud service node sends the digital signature of the first message $(r, s)$ to the cloud server, and the cloud server verifies the digital signature based on the public key, that is, performs identity verification on the cloud service node. After the verification succeeds, the cloud server may establish a secure communication link with the cloud service node.

In addition, it may be understood that, when the software cryptographic module is disposed on the cloud service platform to manage the client and the server in the unified manner, the client may feed back the digital signature of the first message to the software cryptographic module, and then the software cryptographic module may feed back the digital signature of the first message to the cloud service node.

According to the foregoing signature method provided in embodiments of this application, in the collaborative signature phase, the client and the server need to interact with each other only once, that is, exchange a small amount of information, to quickly complete the digital signature of the message. This can improve signature efficiency and performance.

In addition, an embodiment of this application further provides a key update method. A client and a server may collaboratively update a first private key segment/second private key segment for a signature, to implement dynamic storage of private key segments of two parties, so as to increase difficulty in cracking the private key segments of the two parties, and reduce a possibility of leaking the private key segments, thereby improving security of a key and a digital signature. Based on this, the client and the server use the latest first private key segment and second private key segment when performing a digital signature of a message.

Specifically, FIG. 6 shows a key update method, and the method mainly includes the following steps.

S601: The client and the server collaboratively generate a common random point.

The common random point is a point that is on an elliptic curve and that is generated based on a fifth random number and a sixth random number. For details, refer to the following steps S61 to S64 for implementation.

S61: The client may randomly generate the fifth random number, and calculate a third random point $P_3 = [k_3]_* G$ on the elliptic curve based on the fifth random number (for example, represented as $k_3$), where

$$k_3 \in \mathbb{Z}_n$$, and $1 \leq k_3 \leq n - 1$. Then, the client sends the third random point to the server.

Optionally, the client may further send identification information of the client to the server.

S62: The server may randomly generate the sixth random number, and calculate a fourth random point $P_4 = [k_4]_* G$ on the elliptic curve based on the sixth random number (for example, represented as $k_4$), where

$$k_4 \in \mathbb{Z}_n$$, and $1 \leq k_4 \leq n - 1$. Then, the server sends the fourth random point to the client.

It may be understood that S61 and S62 may be simultaneously performed, or S61 is performed before S62, or S62 is performed before S61. A sequence of performing S61 and S62 is not limited in embodiments of this application. S63 and S64 are performed after S61 and S62 are performed.

S63: The client generates the common random point based on the fifth random number and the fourth random point.

For example, the client may calculate the common random point $P' = [k_3]_* P_4$, that is, $P' = [k_3]_* [k_4]_* G$.

S64: The server generates the common random point based on the sixth random number and the third random point.

For example, the server may calculate the common random point $P' = [k_4]_* P_3$, that is, $P' = [k_4]_* [k_3]_* G$.

It may be understood that S63 and S64 may be simultaneously performed, or S63 is performed before S64, or S64 is performed before S63. A sequence of performing S63 and S64 is not limited in embodiments of this application.

S602: The client updates the first private key segment based on a key derivation function and the common random point.

For example, coordinate information of the common random point is denoted as (x',y'). First, the client may calculate u = KDF(x'||y',lens), where u may be understood as a key update parameter or referred to as an update factor, and is used to update the first private key segment; KDF() represents the key derivation function; (x',y') represents the coordinate information of the common random point; x' is a horizontal coordinate of the common random point; y' is a vertical coordinate of the common random point; and lens represents a length of x' or y', for example, 256 bits. Then, the client determines a difference between the first private key segment $T_1$ and the key update parameter u as an updated first private key segment $T_1' = T_1 - u$.

S603: The server updates the second private key segment based on the key derivation function and the common random point.

For example, coordinate information of the common random point is denoted as (x', y'). First, the server may calculate u = KDF(x' ||y', lens), where u may be understood as a key update parameter or referred to as an update factor, and is used to update the second private key segment; KDF() represents the key derivation function; (x', y') represents the coordinate information of the common random point; x' is a horizontal coordinate of the common random point; y' is a vertical coordinate of the common random point; and lens represents a length of x' or y', for example, 256 bits. Then, the server determines a difference between the second private key segment $T_2$ and the key update parameter u as an updated second private key segment $T_2' = T_2 + u$.

Optionally, the foregoing embodiment may be understood as a two-party collaborative SM2 signature method, and may be performed by processors of two parties (for example, the client and the server). The method includes four phases: a pre-calculation phase, a key generation phase, a collaborative signature phase, and a key update phase.

Based on a same concept, the following describes a manner of dividing functional modules inside the client and the server.

    (1) The client includes a pre-calculation module of the client, a key generation module of the client, a collaborative signature module of the client, and a key update module of the client.

The pre-calculation module of the client includes a random number generation submodule, a preset function submodule, an information sending and receiving submodule, and a storage submodule. The random number generation submodule is configured to generate a 1st element and a 2nd element in a 1st triplet. The preset function submodule calculates a 3rd element in the 1st triplet via a first multiplier. The information sending and receiving submodule is configured to exchange an intermediate result of the first multiplier with the server. The storage submodule is configured to store the 1st triplet.

The key generation module of the client includes a random number generation submodule, an SM2 curve calculation submodule, an information sending and receiving submodule, a preset function submodule, a big integer calculation submodule, and a storage submodule. The random number generation submodule is configured to generate a third private key segment and a third random number. The SM2 curve calculation submodule is configured to multiply the third private key segment by a base point (G) on an SM2 elliptic curve in calculation to obtain a first public key segment. The information sending and receiving submodule is configured to send the first public key segment to the server, and receive a public key sent by the server. The preset function submodule calculates w via a second multiplier. The information sending and receiving submodule is configured to exchange an intermediate result of the second multiplier with the server. The big integer calculation submodule is configured to obtain the first private key segment by multiplying the third random number by an inverse of w. The storage submodule is configured to store the first private key segment.

The collaborative signature module of the client includes a private key obtaining submodule, a random number generation submodule, an SM2 curve calculation submodule, a preset function submodule, a big integer calculation submodule, and an information sending and receiving submodule. The private key obtaining submodule is configured to obtain the first private key segment. The random number generation submodule is configured to generate a first random number. The SM2 curve calculation submodule is configured to multiply the first random number by the base point (G) on the SM2 elliptic curve in calculation to obtain a first random point. The preset function submodule is configured to calculate a hash value of a first message based on a hash function. The big integer calculation submodule is configured to calculate a first difference and a second difference. The information sending and receiving submodule is configured to send a first parameter set to the server, and receive a second parameter set sent by the server. The large integer calculation submodule is further configured to calculate a second signature component.

The key update module of the client includes a random number generation submodule, an SM2 curve calculation submodule, an information sending and receiving submodule, an SM2 curve calculation submodule, a preset function submodule, and a big integer calculation submodule. The random number generation submodule is configured to generate the fifth random number. The SM2 curve calculation submodule is configured to multiply the fifth random number by the base point (G) on the SM2 elliptic curve in calculation to obtain the third random point. The information sending and receiving submodule is configured to send the third random point to the server, and receive the fourth random point. The SM2 curve calculation submodule is further configured to multiply the fifth random number by the fourth random point in calculation to obtain the common random point. The preset function submodule calculates a derived value of the common random point based on a derivation function (for example, a key derivation function KDF) to obtain the key update parameter. The big integer calculation submodule subtracts the key update parameter from the first private key segment to obtain the updated first private key segment.

(2) The server includes a pre-calculation module of the server, a key generation module of the server, a collaborative signature module of the server, and a key update module of the server.

The pre-calculation module of the server includes a random number generation submodule, a preset function submodule, an information sending and receiving submodule, and a storage submodule. The random number generation submodule is configured to generate a $1^{st}$ element and a $2^{nd}$ element in a $2^{nd}$ triplet. The preset function submodule calculates a $3^{rd}$ element in the $2^{nd}$ triplet via the first multiplier. The information sending and receiving submodule is configured to exchange the intermediate result of the first multiplier with the client. The storage submodule is configured to store the $2^{nd}$ triplet.

The key generation module of the server includes a random number generation submodule, an SM2 curve calculation submodule, an information sending and receiving submodule, a preset function submodule, a big integer calculation submodule, and a storage submodule. The random number generation submodule is configured to generate a fourth private key segment and a fourth random number. The SM2 curve calculation submodule is configured to multiply the fourth private key segment by the base point (G) on the SM2 elliptic curve in calculation to obtain a second public key segment, and add the first public key segment to the second public key segment to obtain the public key. The information sending and receiving submodule is configured to send the public key to the client. The preset function submodule calculates w via the second multiplier. The information sending and receiving submodule is configured to exchange the intermediate result of the second multiplier with the client. The big integer calculation submodule is configured to obtain the second private key segment by multiplying the fourth random number by the inverse of w. The storage submodule is configured to store the second private key segment.

The collaborative signature module of the server includes a private key obtaining submodule, a random number generation submodule, an SM2 curve calculation submodule, a big integer calculation submodule, and an information sending and receiving submodule. The private key obtaining submodule is configured to obtain the second private key segment. The random number generation submodule is configured to generate a second random number. The SM2 curve calculation submodule is configured to multiply the second random number by the base point (G) on the SM2 elliptic curve in calculation to obtain a second random point. The information sending and receiving submodule is configured to receive the first parameter set sent by the client. The big integer calculation submodule is configured to calculate a first intermediate value, a second intermediate value, and a first signature component. The information sending and receiving submodule is further configured to send the second parameter set to the server.

The key update module of the server includes a random number generation submodule, an SM2 curve calculation submodule, an information sending and receiving submodule, an SM2 curve calculation submodule, a preset function submodule, and a big integer calculation submodule. The random number generation submodule is configured to generate the sixth random number. The SM2 curve calculation submodule is configured to multiply the sixth random number by the base point (G) on the SM2 elliptic curve in calculation to obtain the fourth random point. The information sending and receiving submodule is configured to send the fourth random point to the server, and receive the third random point. The SM2 curve calculation submodule is further configured to multiply the sixth random number by the third random point in calculation to obtain the common random point. The preset function submodule calculates the derived value of the common random point based on the derivation function (for example, the key derivation function KDF) to obtain the key update parameter. The big integer calculation submodule subtracts the key update parameter from the second private key segment to obtain the updated second private key segment.

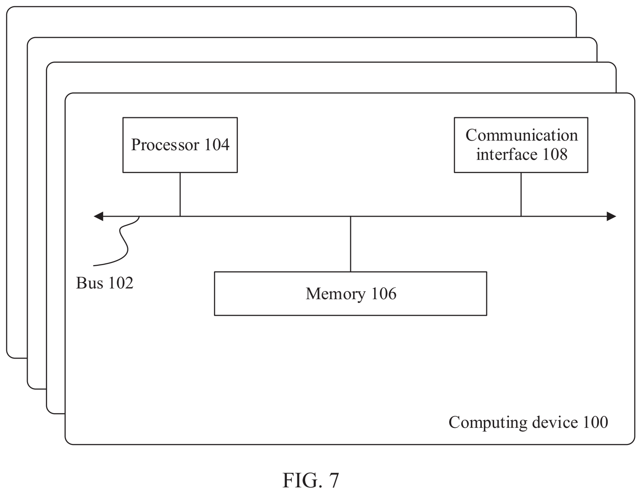

Based on the foregoing embodiments, an embodiment of this application further provides a computing device cluster. As shown in FIG. 7, the computing device cluster includes at least one computing device 100, and each of the at least one computing device 100 includes a processor 104 and a memory 106.

The memory 106 in the at least one computing device 100 in the computing device cluster is configured to store computer-executable instructions, for example, may store instructions used by a same signature system to perform the foregoing signature method. The processor 104 in the at least one computing device 100 executes the computer-executable instructions, so that the computing device cluster executes the instructions for the signature method. In some possible implementations, one or more computing devices 100 in the computing device cluster may also be configured to execute some instructions used by the signature system to perform the signature method. In other words, a combination of the one or more computing devices 100 may jointly execute the instructions used by the signature system to perform the signature method.

Each computing device 100 may further include a communication interface 108, and one computing device 100 may exchange information with another computing device through the communication interface 108. For example, the communication interface 108 may be a transceiver, a circuit, a bus, a module, a pin, or another type of communication interface. When the computing device 100 is a chip-type apparatus or circuit, the communication interface 108 in the computing device 100 may alternatively be an input/output circuit, and may input information (or receive information) and output information (or send information). The processor is an integrated processor, a microprocessor, an integrated circuit, or a logic circuit, and the processor may determine output information based on input information.

Coupling in this embodiment of this application may be indirect coupling or a communication connection between apparatuses, units, or modules, may be in an electrical form, a mechanical form, or another form, and is used for information exchange between the apparatuses, the units, or the modules. The processor 104 may operate cooperatively with the memory 106 and the communication interface 108. A specific connection medium between the processor 104, the memory 106, and the communication interface 108 is not limited in embodiments of this application.

Optionally, refer to FIG. 7. The processor 104, the memory 106, and the communication interface 108 are connected to each other through a bus 102. The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one thick line is used for representation in FIG. 7, but this does not mean that there is only one bus or only one type of bus.

In this embodiment of this application, the processor may be a general-purpose processor, a digital signal processor, an application-specific integrated circuit, a field-programmable gate array or another programmable logic device, a discrete gate or transistor logic device, or a discrete hardware component, and may implement or perform the methods, steps, and logic block diagrams in embodiments of this application. The general-purpose processor may be a microprocessor, any conventional processor, or the like. The steps of the methods in combination with embodiments of this application may be directly performed and completed by a hardware processor, or may be performed and completed by a combination of hardware and software modules in the processor.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can be used to carry or store expected program code in a form of instructions or a data structure and that can be accessed by a computer. However, this is not limited thereto. The memory in this embodiment of this application may alternatively be a circuit or any other apparatus that can implement a storage function, and is configured to store the program instructions and/or the data.

In addition, it should be noted that memories 106 in different computing devices 100 in the computing device cluster may store different instructions, and instructions stored in the memory 106 in one computing device 100 are used to perform some functions of the signature system. In other words, the instructions stored in the memory 106 in the computing device 100 may implement some functions of a client or a server.

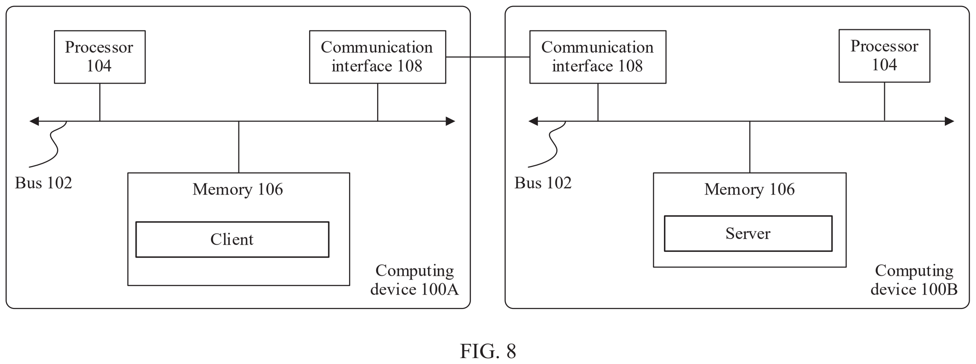

FIG. 8 shows a possible implementation. As shown in FIG. 8, two computing devices 100A and 100B are connected to each other through the communication interface 108. A memory in the computing device 100A stores instructions for performing functions of the client. A memory in the computing device 100B stores instructions for performing functions of the server. In other words, the memories 106 in the computing devices 100A and 100B jointly store instructions used by the signature system to perform the signature method.

It should be understood that functions of the computing device 100A shown in FIG. 8 may also be completed by a plurality of computing devices 100. Similarly, functions of the computing device 100B may also be completed by a plurality of computing devices 100.

An embodiment of this application further provides a computer program product including instructions. The computer program product may be software or a program product that includes the instructions and that can run on a computing device or can be stored in any usable medium. When the computer program product runs on the computing device cluster, the computing device cluster is enabled to perform the foregoing application on the signature system to perform the signature method, or the computing device cluster is enabled to perform the foregoing application on the signature system to perform the signature method.

An embodiment of this application further provides a computer-readable storage medium. The computer-readable storage medium may be any usable medium accessible by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct a computing device cluster to perform the foregoing application on the signature system to perform the signature method, or instruct the computing device cluster to perform the foregoing application on the signature system to perform the signature method.

In embodiments of this application, on the premise that there is no logic conflict, examples may be mutually referenced. For example, methods and/or terms in the method embodiments may be mutually referenced. For example, functions and/or terms in the system embodiments may be mutually referenced. For example, functions and/or terms in the system examples and the method examples may be mutually referenced.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

**Claims**

1. A signature method, comprising:

    Receiving, by a client, a to-be-signed first message from a cloud service node;
    sending, by the client, a first parameter set to a server, wherein the first parameter set is generated based on the first message, a $1^{st}$ triplet, a first random number, identification information of the client, and a first private key segment;
    sending, by the server, a second parameter set to the client, wherein the second parameter set is generated based on the first parameter set, a $2^{nd}$ triplet, a second random number, and a second private key segment, and the second parameter set comprises a first signature component;
    generating, by the client, a second signature component based on the $1^{st}$ triplet and the second parameter set; and
    sending, by the client, a digital signature of the first message to the cloud service node, wherein the digital signature of the first message comprises the first signature component and the second signature component, and the digital signature of the first message is used for identity verification on the cloud service node in a cloud server.

2. The method according to claim 1, wherein a $1^{st}$ element and a $2^{nd}$ element in the $1^{st}$ triplet are randomly generated by the client, a $1^{st}$ element and a $2^{nd}$ element in the $2^{nd}$ triplet are randomly generated by the server, and a $3^{rd}$ element in the $1^{st}$ triplet and a $3^{rd}$ element in the $2^{nd}$ triplet are generated based on input and output of a first multiplier, wherein the input of the first multiplier comprises the $1^{st}$ element and the $2^{nd}$ element in the $1^{st}$ triplet, and the $1^{st}$ element and the $2^{nd}$ element in the $2^{nd}$ triplet.

3. The method according to claim 1 or 2, wherein the first private key segment is generated based on a third random number and output of a second multiplier, and the second private key segment is generated based on a fourth random number and the output of the second multiplier, wherein the output of the second multiplier corresponds to input of the second multiplier, and the input of the second multiplier is determined based on a third private key segment and the third random number that are randomly generated by the client, and a fourth private key segment and the fourth random number that are randomly generated by the server.

4. The method according to any one of claims 1 to 3, wherein the first parameter set comprises the following parameters:

a first random point that is on an elliptic curve and that is generated based on the first random number;

a hash value generated based on the first message and the identification information of the client;

a first difference between the first private key segment and the $1^{st}$ element in the $1^{st}$ triplet; and

a second difference between the first random number and the $2^{nd}$ element in the $1^{st}$ triplet.

5. The method according to claim 4, wherein the second parameter set comprises the following parameters:

the first signature component generated based on the first random point, the second random number, and the hash value;

a first intermediate value generated based on the first difference, the second private key segment, and the $1^{st}$ element in the $2^{nd}$ triplet;

a second intermediate value generated based on the second difference, the $2^{nd}$ element in the $2^{nd}$ triplet, the second random number, and the first signature component; and

a third intermediate value generated based on the first intermediate value, the second intermediate value, and the $2^{nd}$ triplet.

6. The method according to any one of claims 1 to 5, wherein the first parameter set further comprises the identification information of the client, and the method further comprises:

determining, by the server based on the identification information of the client, the second private key segment paired with the first private key segment.

7. The method according to any one of claims 1 to 6, further comprising:

updating, by the client, the first private key segment based on a key derivation function and a common random point; and

updating, by the server, the second private key segment based on the key derivation function and the common random point, wherein

the common random point is a point that is on the elliptic curve and that is generated based on a fifth random number and a sixth random number, the fifth random number is randomly generated by the client, and the sixth random number is randomly generated by the server.

8. A signature system, comprising a client and a server, wherein

the client is configured to receive a to-be-signed first message from a cloud service node, and send a first parameter set to the server, wherein the first parameter set is generated based on the first message, a $1^{st}$ triplet, a first random number, identification information of the client, and a first private key segment;

the server is configured to send a second parameter set to the client, wherein the second parameter set is generated based on the first parameter set, a $2^{nd}$ triplet, a second random number, and a second private key segment, and the second parameter set comprises a first signature component; and

the client is further configured to generate a second signature component based on the $1^{st}$ triplet and the second parameter set, and send a digital signature of the first message to the cloud service node, wherein the digital signature of the first message comprises the first signature component and the second signature component, and the digital signature of the first message is used for identity verification on the cloud service node in a cloud server.

9. The system according to claim 8, wherein a $1^{st}$ element and a $2^{nd}$ element in the $1^{st}$ triplet are randomly generated by the client, a $1^{st}$ element and a $2^{nd}$ element in the $2^{nd}$ triplet are randomly generated by the server, and a $3^{rd}$ element in the $1^{st}$ triplet and a $3^{rd}$ element in the $2^{nd}$ triplet are generated based on input and output of a first multiplier, wherein the input of the first multiplier comprises the $1^{st}$ element and the $2^{nd}$ element in the $1^{st}$ triplet, and the $1^{st}$ element and the $2^{nd}$ element in the $2^{nd}$ triplet.

10. The system according to claim 8 or 9, wherein the first private key segment is generated based on a third random number and output of a second multiplier, and the second private key segment is generated based on a fourth random number and the output of the second multiplier, wherein the output of the second multiplier corresponds to input of the second multiplier, and the input of the second multiplier is determined based on a third private key segment and the third random number that are randomly generated by the client, and a fourth private key segment and the fourth random number that are randomly generated by the server.

**11.** The system according to any one of claims 8 to 10, wherein the first parameter set comprises the following parameters:

a first random point that is on an elliptic curve and that is generated based on the first random number;

a hash value generated based on the first message and the identification information of the client;

a first difference between the first private key segment and the $1^{st}$ element in the $1^{st}$ triplet; and

a second difference between the first random number and the $2^{nd}$ element in the $1^{st}$ triplet.

**12.** The system according to claim 11, wherein the second parameter set comprises the following parameters:

the first signature component generated based on the first random point, the second random number, and the hash value;

a first intermediate value generated based on the first difference, the second private key segment, and the $1^{st}$ element in the $2^{nd}$ triplet;

a second intermediate value generated based on the second difference, the $2^{nd}$ element in the $2^{nd}$ triplet, the second random number, and the first signature component; and

a third intermediate value generated based on the first intermediate value, the second intermediate value, and the $2^{nd}$ triplet.

**13.** The system according to any one of claims 8 to 12, wherein the first parameter set further comprises the identification information of the client, and the server is further configured to determine, based on the identification information of the client, the second private key segment paired with the first private key segment.

**14.** The system according to any one of claims 8 to 13, wherein

the client is further configured to update the first private key segment based on a key derivation function and a common random point; and

the server is further configured to update the second private key segment based on the key derivation function and the common random point, wherein

the common random point is a point that is on the elliptic curve and that is generated based on a fifth random number and a sixth random number, the fifth random number is randomly generated by the client, and the sixth random number is randomly generated by the server.

**15.** A computing device cluster, comprising at least one computing device, wherein the computing device comprises a processor and a memory;

the memory of the at least one computing device is configured to store computer-executable instructions; and

the processor of the at least one computing device is configured to execute the computer-executable instructions, to enable the computing device cluster to perform the method according to any one of claims 1 to 7.

**16.** A computer-readable storage medium, wherein the computer-readable storage medium comprises computer program instructions, and when the computer program instructions are run by a computing device cluster, the computing device cluster is enabled to perform the method according to any one of claims 1 to 7.

**17.** A computer program product, wherein the computer program product comprises instructions, and when the instructions are run by a computing device cluster, the computing device cluster is enabled to perform the method according to any one of claims 1 to 7.

Signature system 1000

FIG. 1

Cloud service node

To-be-signed message | Digital signature

Software cryptographic module 200

To-be-signed message | Digital signature

Client 120 ⟷ Server 110

FIG. 2

FIG. 3

| Client | | Server |
|---|---|---|

| S41: Randomly generate two integers: $d_1$ and $z_1$ | | S41: Randomly generate two integers: $d_2$ and $z_2$ |
|---|---|---|

S42

$1+d_1$ ⟶    ⟵ $d_2$

$\Pi_{mul}^2$

$z_1$ ⟶    ⟵ $z_2$

⟵ w    ↓    w ⟶

| S43: Calculate a first private key segment $T_1 = z_1 * w^{-1}$ | S43: Calculate a second private key segment $T_2 = z_2 * w^{-1}$ |
|---|---|

FIG. 4

| Client | | Server |
|---|---|---|

S501: Obtain a to-be-signed first message

S502: Generate a first parameter set based on the first message, a $1^{st}$ triplet, a first random number, identification information of the client, and a first private key segment

S503: First parameter set

S504: Generate a second parameter set based on the first parameter set, a $2^{nd}$ triplet, a second random number, and a second private key segment

S505: Second parameter set (first signature component)

S506: Generate a second signature component based on the $1^{st}$ triplet and the second parameter set

S507: Send a digital signature of the first message

FIG. 5

| Client | Server |
|---|---|

S601: Collaboratively generate a common random point

S602: Update a first private key segment based on a key derivation function and the common random point

S603: Update a second private key segment based on the key derivation function and the common random point

FIG. 6

Processor 104

Communication interface 108

Bus 102

Memory 106

Computing device 100

FIG. 7

FIG. 8

## INTERNATIONAL SEARCH REPORT

| International application No. |
| --- |
| **PCT/CN2024/080363** |

| A. | CLASSIFICATION OF SUBJECT MATTER |
| --- | --- |
| | H04L9/32(2006.01)i |

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, BING: 私钥分片, 签名, 三元组, 协同, 联合, 多重数字签名, Cooperative signature, Co-signature, compact signature, Private Key

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021169521 A1 (HUAWEI TECHNOLOGIES CO., LTD.) 02 September 2021 (2021-09-02)<br>    description, pages 1-13 | 1-17 |
| A | CN 114978488 A (BEIJING ELECTRONIC SCIENCE AND TECHNOLOGY INSTITUTE) 30 August 2022 (2022-08-30)<br>    entire document | 1-17 |
| A | CN 115002759 A (BEIJING ELECTRONIC SCIENCE AND TECHNOLOGY INSTITUTE) 02 September 2022 (2022-09-02)<br>    entire document | 1-17 |
| A | CN 110971405 A (ALIPAY (HANGZHOU) INFORMATION TECHNOLOGY CO., LTD.) 07 April 2020 (2020-04-07)<br>    entire document | 1-17 |
| A | CN 115442052 A (YUNHAI CHAIN HOLDINGS CO., LTD.) 06 December 2022 (2022-12-06)<br>    entire document | 1-17 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 April 2024** | **08 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/080363** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2011264917 A1 (PAYCOOL INTERNATIONAL LIMITED) 27 October 2011 (2011-10-27)<br>entire document | 1-17 |
| A | 秦金祥 等 (QIN, Jinxiang et al.). "协同设计系统安全机制的研究 (Study on the Security Mechanism of Cooperative Design System)"<br>*西安石油大学学报(自然科学版) (Journal of Xi'an Shiyou University(Natural Science Edition))*, Vol. 21, No. 03, 26 May 2006 (2006-05-26), pages 99-103<br>ISSN: 1673-064X,<br>entire document | 1-17 |
| A | 张亚玲 等 (ZHANG, Yaling et al.). "一个高效的基于身份和RSA的紧致多重数字签名方案 (An Efficient Identity Based Compact Multi-signature From RSA)"<br>*电子与信息学报 (Journal of Electronics & Information Technology)*,<br>Vol. 30, No. 09, 15 September 2008 (2008-09-15), pages 2246-2249<br>ISSN: 1009-5896,<br>entire document | 1-17 |

Form PCT/ISA/210 (second sheet) (July 2022)

**INTERNATIONAL SEARCH REPORT**
Information on patent family members

International application No.

**PCT/CN2024/080363**

| Patent document cited in search report | | | Publication date (day/month/year) | Patent family member(s) | | | Publication date (day/month/year) |
|---|---|---|---|---|---|---|---|
| WO | 2021169521 | A1 | 02 September 2021 | CN | 113300846 | A | 24 August 2021 |
| | | | | CN | 113300846 | B | 09 August 2022 |
| CN | 114978488 | A | 30 August 2022 | | None | | |
| CN | 115002759 | A | 02 September 2022 | | None | | |
| CN | 110971405 | A | 07 April 2020 | CN | 110971405 | B | 14 June 2022 |
| | | | | HK | 40026913 | A0 | 15 January 2021 |
| CN | 115442052 | A | 06 December 2022 | CN | 115442052 | B | 23 June 2023 |
| US | 2011264917 | A1 | 27 October 2011 | WO | 2010046565 | A2 | 29 April 2010 |
| | | | | WO | 2010046565 | A3 | 08 July 2010 |
| | | | | FR | 2937484 | A1 | 23 April 2010 |
| | | | | FR | 2937484 | B1 | 17 June 2011 |
| | | | | EP | 2345202 | A2 | 20 July 2011 |
| | | | | EP | 2345202 | B1 | 05 April 2017 |
| | | | | US | 8589693 | B2 | 19 November 2013 |

Form PCT/ISA/210 (patent family annex) (July 2022)

**EP 4 648 354 A1**

**Patent documents cited in the description**

- CN 202310308780